# EUROPEAN PATENT APPLICATION

(11) **EP 2 595 110 A1**
(43) Date of publication of application: **22.05.2013**
(21) Application number: 12192882.4
(22) Date of filing: 15.11.2012
(51) Int. Cl.: G06Q 30/02

(54) **Method of networking groups of users and organizations and disseminating information**

(30) Priority: 15.11.2011 US 201161560069 P; 18.05.2012 US 201261648921 P; 06.06.2012 US 201261689447 P
(71) Applicant: TextFund, Inc., Cheyenne, WY 82001 (US); Timlin, Bryan, Bloomfield Hills, MI 48301 (US); Timlin, Andrew, Bloomfield Hills, MI 48301 (US); Timlin, Alex, Bloomfield Hills, MI 48301 (US); Cacace, Eduardo Martin, Vancouver British Columbia V6Z 2M9 (CA); Peters, Michael John, New Westminster British Columbia V3M 0B (CA)
(72) Inventor: Timlin, Bryan, Bloomfield Hills, MI 48301 (US); Timlin, Andrew, Bloomfield Hills, MI 48301 (US); Timlin, Alex, Bloomfield Hills, MI 48301 (US); Cacace, Eduardo Martin, Vancouver, British Columbia V6Z 2M9 (CA); Peters, Michael John, New Westminster, British Columbia V3M 0B (CA)
(74) Representative: McDonough, Jonathan

(57) **Abstract**

A method of connecting users and organisations using an internet based communication platform having a database and a user interface, said method comprising the steps of using the interface to select the interested organization and automatically connect to a sub-group of users associated with the interested organization and sending one-way notifications from the interested organization to the sub-group of users through one of a short message service (SMS) and e-mail.

## Description

### CROSS-REFERENCE TO RELATED APPLICATIONS

The subject patent application claims priority to and all the benefits of U.S. Provisional Patent Application Serial No. 61/560,069 entitled "System And Method For Disseminating Information", which was filed on November 15, 2011; U.S. Provisional Patent Application Serial No. 61/648,921 entitled "System And Method For Disseminating Information", which was filed on May 18,2012; and U.S. Provisional Patent Application Serial No. 61/689,447 entitled "System Portal", which was filed on June 6, 2012, the disclosures of which are hereby incorporated by reference.

### BACKGROUND OF THE INVENTION

### 1. Field of the Invention

The subject invention relates to a system and method for networking groups of users and organizations, and more particularly, for disseminating information from the organizations to the users by text or email.

### 2. Description of Related Art

In commerce, organizations seek to maintain contact with their frequently visiting customers because such customers drive sales. In many instances organizations drive revenue higher by encouraging existing customers to visit and shop with them more often. In order to drive their existing customers to their location, organizations use several techniques. For example, some organizations encourage customers to drop their business cards at the store. Organizations could then build lists using these business cards to maintain a list of loyal customers and push promotions to them. A problem with this approach is that organizations do not have real-time interaction with their customers and must expend time and money resources to enter in the received data on the business cards. Moreover, such approaches are prone to data entry errors due to their highly manual process.

Other approaches to help drive traffic to organizations revolve around processes that induce customers to receive emails of offers, promotions, events and the like. However, many times these customers come from purchased contact lists so the offers and promotions, and the cost to produce them, are often wasted on consumers who have no interest in the organizations.

Therefore, what the present state of the art lacks is a targeted, interest-focused platform that effectively networks groups of users and organizations.

### SUMMARY OF THE INVENTION AND ADVANTAGES

Accordingly, in a first aspect the present invention provides a method of connecting users and organisations using an internet based communication platform having a database and a user interface, said method comprising the steps of:
storing information regarding a plurality of organisations to define a plurality of registered organisations and corresponding registered information;
inputting demographic information and at least one of a cellular phone number and an e-mail address of a user into the database to define a registered user;
using the interface to conduct a search in the database for registered information that is of interest to the registered user;
identifying particular registered information that is of interest to the registered user to define an interested organization;
using the interface to select the interested organization and automatically connect to a sub-group of users associated with the interested organization;
sending one-way notifications from the interested organization to the sub-group of users through one of a short message service (SMS) and e-mail;
receiving the one-way notification sent to the sub-group at the registered user through one of the cellular phone number and the e-mail address associated with the registered user when the registered user is connected to the sub-group, and
using the interface to de-select the interested organization and automatically disconnect from the sub-group of users associated with the interested organization when the registered user is no longer interested in the interested organization.

Preferably, the step of using the interface to select the interested organization is further defined as activating a selection icon on the interface that is unique to the interested organization.

The method can further include the step of prohibiting the registered organizations to have access to the cellular phone number and the e-mail address of the registered user.

The method can further include the step of prohibiting direct communication from the registered user to the registered organization through the interface.

The method can further include the steps of allowing the registered organization access to the demographic information of a registered user if the registered user identified the registered organization as an interested organization, and
prohibiting the registered organization to have access to the cellular phone number and the e-mail address of the registered user

Preferably, the step of inputting demographic information is further defined as inputting at least one of a zip code, birth year and gender of the user into the network database.

Preferably, the step of storing information regarding a plurality of organisations is further defined as storing geographically specific content of a registered organization into the database, and
wherein the step of using the interface to conduct a search is further defined as using the interface to conduct a search for the geographically specific content.

In a further aspect of the invention there is provided an internet-based communication platform for connecting users and organisations, said platform comprising
a database having:
information regarding a plurality of organisations to define a plurality of registered organisations and corresponding registered information; and demographic information and at least one of a cellular phone number and an e-mail address of a user of the network database to define a registered user;
a user interface connected to the database having
a searchable list of at least one of the registered organisations and registered information for the registered user to conduct a search in the database to identify particular registered information that is of interest to the registered user to define an interested organization;
a selection icon associated with each of the registered organisations for the registered user to select the interested organization and automatically connect to a sub-group of users associated with the interested organization and to de-select the interested organization and automatically disconnect from the sub-group of users associated with the interested organization when the interested organization is no longer of interest; and
a notification system connected to the network database for sending one way notifications from the interested organization to the sub-group of users through one of a short message service (SMS) and e-mail such that the registered user receives the one-way notification through one of the cellular phone number and the e-mail address associated with the registered user when the registered user has selected the interested organization.

In a further aspect of the invention there is provided a method of connecting users and organisations using an internet based communication platform having a database and a user interface, said method comprising the steps of
storing information regarding a plurality of organizations into the database;
receiving through the user interface information relating to a particular user;
receiving through the user interface search criteria from the user;
generating and displaying on the user interface a list of search results based on the search criteria from the user and the information relating to the plurality of organizations stored in the database;
receiving a request through the user interface from the user to join a particular organization; and,
sending a one-way notification to a group of users who have joined that particular organization.

Preferably, the number suitable for receiving notifications is a mobile number, and the method further includes
allowing an organization access to the demographic information of users that have joined that particular organization; and,
prohibiting an organization access to the users mobile phone number and e-mail address.

Preferably, the step of sending one-way notifications is further defined as either
(i) sending one way notifications having at least one of promotional information, event notifications, general business information and coupons; or.
(ii) sending one way notifications having at least one link to additional information.

Preferably, the step of storing information regarding a plurality of organisations is further defined as storing geographically specific content of the organization into the database; and wherein the search criteria from the user includes geographically specific content.

Preferably, the method further includes the step of ranking and displaying on the interface all of the organisations according to the number of users who have joined each organization.

Preferably, the method further includes the step of scheduling the delivery of the one-way notification for a particular day and time.

In a further aspect of the invention there is provided a system for implementing an internet based communication platform for connecting users and organisations, said system includes at least one computing device having non-transitory computer readable storage medium with an executable program stored thereon, wherein the program instructs a computing device to:
store information regarding a plurality of organisations into a database;
receive through a user interface information relating to a particular user;
receive through the user interface search criteria from the user;
generate and display on the user interface a list of search results based on the search criteria from the user and the information relating to the plurality of organisations stored in the database;
receive a request through the user interface from the user to join a particular organization; and,
send a one-way notification to a group of users who have joined that particular organization.

### BRIEF DESCRIPTION OF THE DRAWINGS

Other advantages of the present invention will be readily appreciated as the same becomes better understood by reference to the following detailed description when considered in connection with the accompanying drawings.
Figure 1 illustrates an exemplary internet-based communication system according to an embodiment of the present invention.
Figure 2 illustrates an exemplary login screen according to one embodiment of the user interface.
Figure 3 illustrates an exemplary mobile phone display for receiving a confirmation code according to an embodiment of the present invention.
Figure 4 illustrates an exemplary screen displaying search results according to one embodiment of the user interface.
Figure 5 illustrates another exemplary screen displaying search results according to one embodiment of the user interface.
Figure 6 illustrates another exemplary screen displaying search results according to one embodiment of the user interface.
Figure 7 illustrates an exemplary screen displaying an organization profile according to one embodiment of the user interface.
Figure 8 illustrates an exemplary screen displaying a user's joined organizations according to one embodiment of the user interface.
Figure 9 illustrates an exemplary screen displaying the most popular organizations according to one embodiment of the user interface.

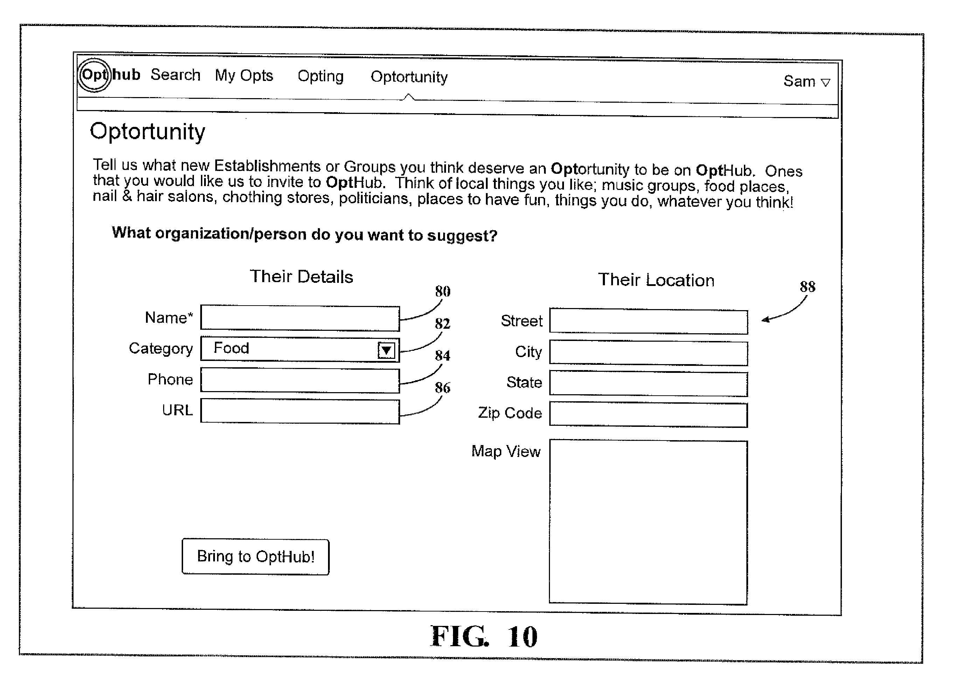

Figure 10 illustrates an exemplary screen for submitting requests for particular organizations to join the network according to one embodiment of the user interface.

### DETAILED DESCRIPTION OF THE INVENTION

As an initial matter, certain trademarks, tradenames and/or servicemarks are depicted in the Figures and/or discussed in the description. The use of these marks is in now way intended to diminish the exclusivity of these marks or to render these marks generic.

### Overview

The system and method disclosed herein is an internet-based communication platform or network that facilitates relationships between users (e.g. consumers) and content providers such as organizations, establishments, businesses, groups, etc. (hereinafter referred to as organizations). The internet-based platform provides a user with searchable access to geographically local organizations that have joined the network. Upon joining the network, the user provides demographics and certain personal information such as, name, cell phone number (for receiving text messages), email address, zip code, birth year and gender. Using this information, the user is able to search the network database of organizations that are closest to the user's location (as provided using the zip code entered by the user). In one embodiment, the list of organizations is divided into categories (e.g., food, shopping, entertainment, etc.) and is searchable using a plurality of search criteria. The initial list, however, can be generated based on the location of the user.

The user has the ability to join, or opt-in, to a particular organization, which allows the organization to send one-way messages and notifications to the user by email and/or text messages. The notifications may contain any information, such as, but not limited to, business information, specials, sales, general information, coupons, etc. The notifications may also contain attachments or provide links to attachments in the form of URLs. Although the organization is generally aware that the user has joined or opted-in to their group, the organization does not have access to any personal information. The only information about the user that the organization has access to is the user's location based on the zip code, gender and age range. Once a user opts-out from an organization, the organization can no longer send notifications to the user and has no way to access the identifying information of the opted-out user. Therefore, the user's information remains anonymous and private.

In sum, the system and method disclosed herein includes a one-way text and email information portal that provides for its users a localized search engine that protects the privacy of the user from the organization. In one embodiment, the information portal is not a fee-based system for either the user or the organization, while in other embodiments; fees may be assessed for various services or features.

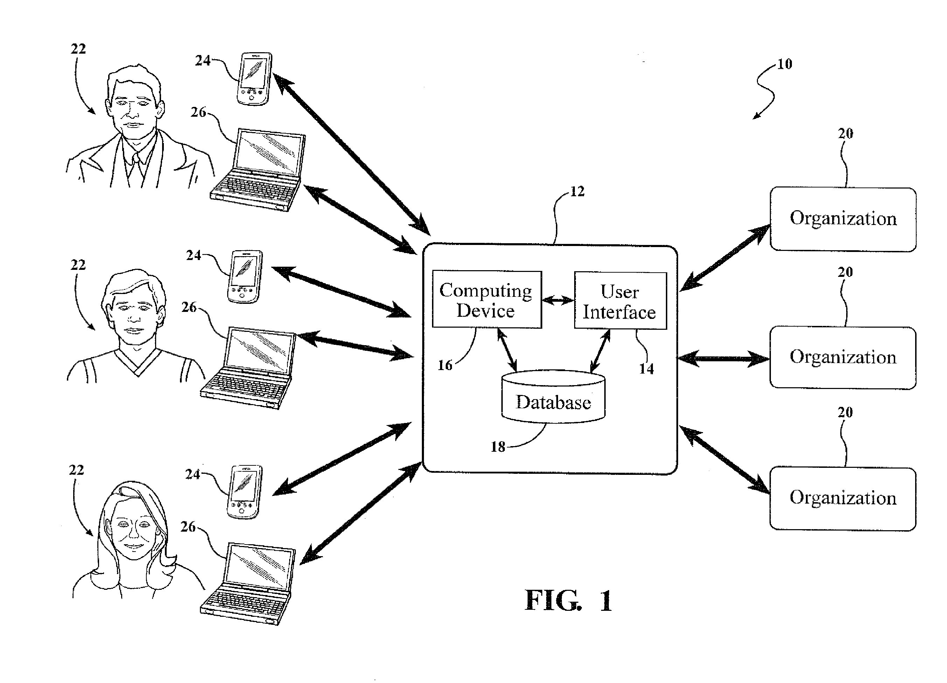

Referring to the Figures, wherein like numerals indicate like or corresponding parts throughout the several views, an internet-based communication network 10 that facilitates relationships between users and organization is shown. Figure 1 illustrates an exemplary communication network 10 having a central communication hub 12 that includes a user interface 14 in communication with one or more computing devices 16 and a database 18. Organizations 20 and users 22 communicate with the central communication hub 12 through the user interface 14, which may be accessed through any connection to the internet. Organizations 20 become registered organizations by providing certain demographic and identifying information to the central communication hub 12. In this way, organizations can be approved and validated by system administrators prior to enrollment into the network as trusted and registered organizations. In one embodiment, information from the organizations 20 is entered into the system through the user interface 14. The information may also be entered by system personnel. The information relating to the organization 20 is generally stored in the database 18, but may also be stored or otherwise modified or manipulated by the one or more of the computing devices 16.

Users 22 become registered users by accessing the user interface 14 through any internet compatible device and providing select information. Internet compatible devices include, but are not limited to, mobile phones, personal computers including desktop and laptop computers, personal digital assistants (PDAs), tablet computers, or the like. As discussed in detail below, users 22 may choose to receive communication and notifications from the network 12 by text (e.g., short message service (SMS)) through a mobile device, such as a cellular phone 24, and/or through email using any internet compatible device, such as a laptop computer 26 as set forth above. The process for accessing and joining the network and joining registered organizations is described further using the following Figure.

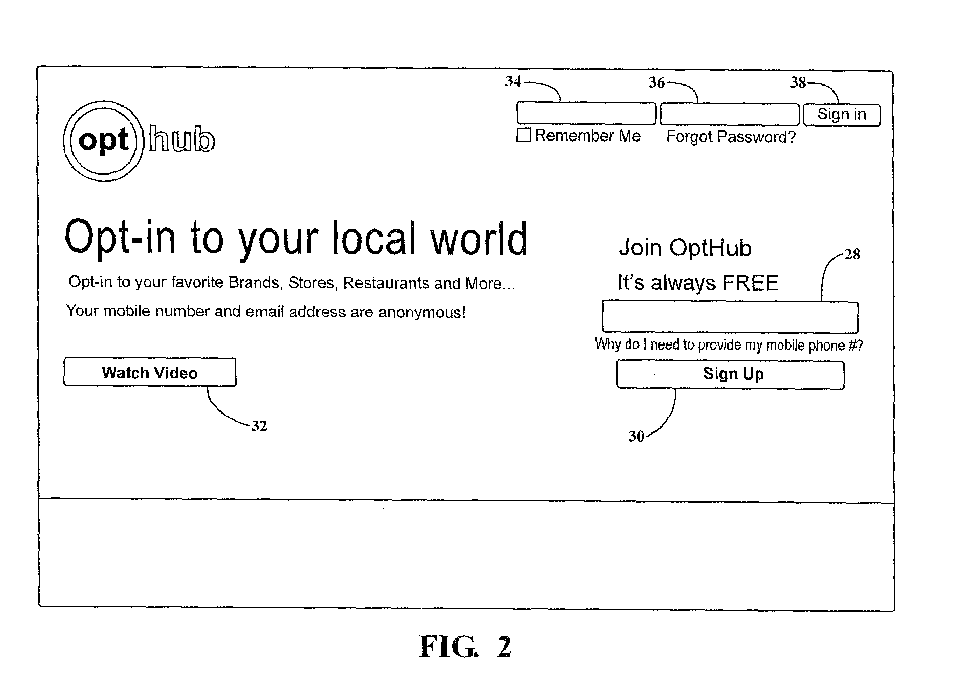

Figure 2 illustrates an exemplary user interface 14 screen that a user 22 may encounter when first visiting the user interface 14 through a network website. To create an account and join the network 12, the user 22 enters a mobile phone number in text box 28 and selects a "Sign Up" button 30. The user may also select a "Watch Video" button 32 to play a tutorial. If the user is already a registered user, the user may enter a username and password in text boxes 34 and 36, respectively, and select the "Sign In" button 38.

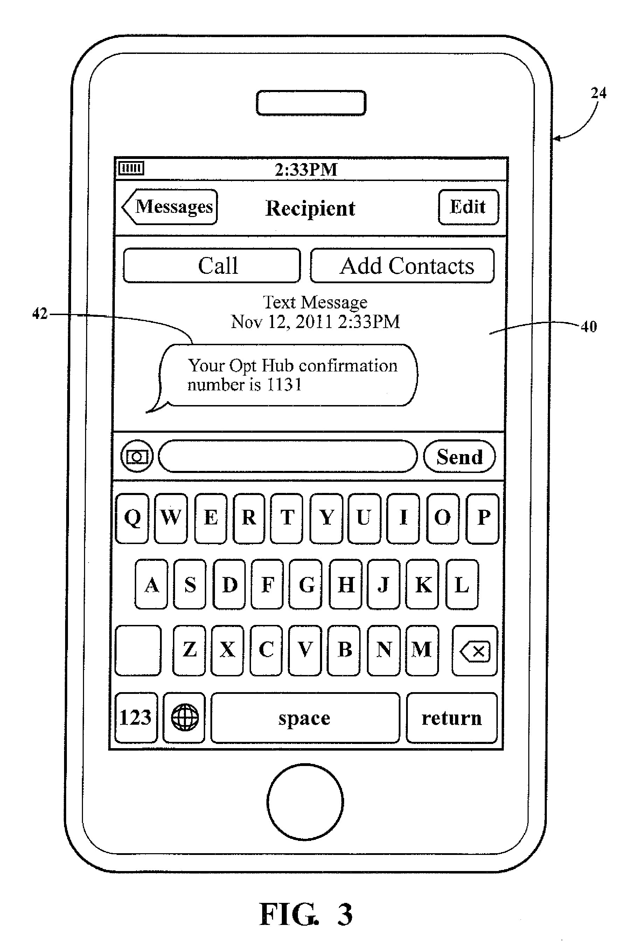

Once the sign up request is initiated by selecting the "Sign Up" button 30, the user 22 receives a confirmation text message 40, as shown in Figure 3, using the mobile phone number entered at the user interface 14 shown in Figure 1. The text message includes a confirmation number 42 that is entered by the user 22 when prompted by the system. The system confirms the confirmation code and prompts the user 22 to enter the required personal information, such as email address, zip code, birth year and gender. The user 22 then accepts the terms and conditions creating an account as a requested user.

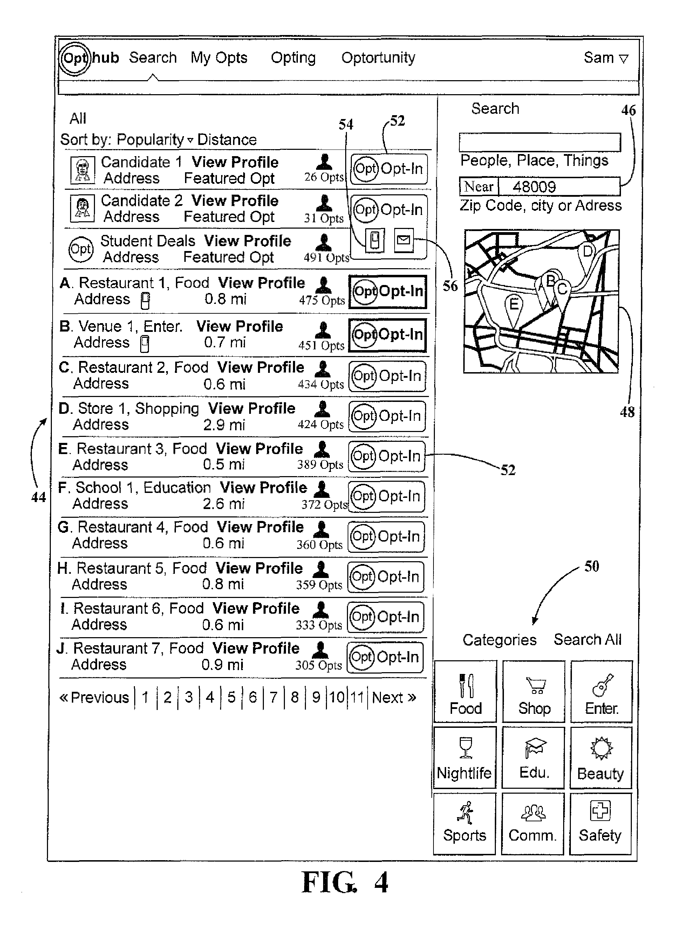

Referring now to Figure 4, the user 22 may search all registered organizations 20 using any number of search queries, such as, but not limited to, keywords, phrases, categories, etc. Searching for organizations and groups is done based on proximity to the user 22. When calculating the distance of organizations and groups from a given zip code, a table is used to convert from zip code to coordinates. The distance between coordinates is calculated using a stored procedure that uses the Haversine Formula. The Haversine Formula is an equation important in navigation, giving great-circle distances between two points on a sphere from their longitudes and latitudes. It is a special case of a more general formula in spherical trigonometry, the law of haversines, relating the sides and angles of spherical "triangles." This method efficiently sorts and filters the organizations before displaying them. Because the Haversine Formula cannot account for geographic obstacles and the actual route taken between coordinates, additional mapping programs are used to refine the distance displayed for each organization.

Figure 4 illustrates an exemplary screen on the user interface 14 showing a list of results 44 based on a zip code entered at text box 46. The results are also displayed on an interactive map 48. The results can be sorted according to a variety of criteria including by popularity and distance from the center point of the zip code. The search results shown in Figure 4 include all registered organizations 20 within a predetermined distance from the zip code entered at 46. The search can also be conducted using the bank of categories 50 located at the lower right hand corner of the screen. The categories 50 can be searched individually, as a group, or using all categories.

Each of the search results 44 shown in Figure 4 includes the name of the organization 20, the address of the organization 20, the distance of the organization 20 to the center point of the zip code entered, the assigned category, a link to view a profile of the organization 20, an icon indicating the selected communication method, an indication of the number of users 22 who have already joined or opted-in to the organization 20, and a join or opt-in button 52 that allows the user 22 to join that organization 20. In one embodiment, the opt-in button 52 is highlighted when a user has already joined that particular organization 20 and un-highlighted when the user has not yet joined. Other methods of indicating the joined or unjoined status of a user may also be employed. For example, the text of button 52 may change to indicate the status.

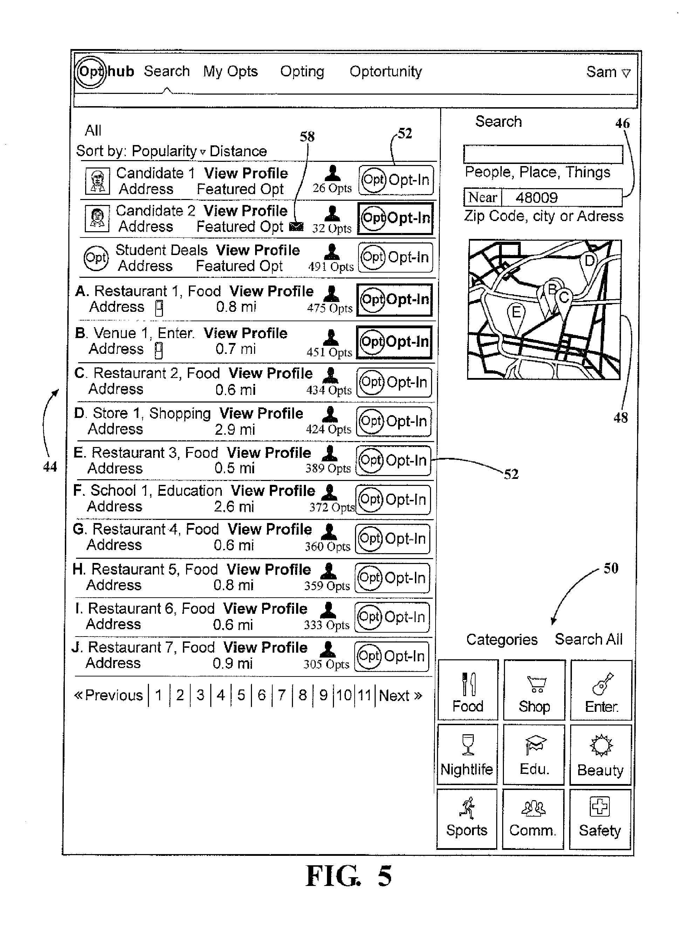

When a user 22 selects the opt-in button 52 to join an organization 20, two additional buttons appear in a pop-up window type configuration. The user 22 selects one or both of the mobile phone icon button 54 and the email icon button 56 to indicate the user's 22 communication preference. In other words, the user can choose to receive notifications from the organization 20 by either one or both of text messages and email. Figure 5 illustrates an exemplary screen shot after the user 22 has joined "Candidate 2" and selected email as the communication preference as indicated by the highlighted opt-in button 52 and the email icon 58.

Notifications are sent based on criteria specified by the organization 20. Based on this criteria, the system queries the database 18 for joined or opted-in users that match the given criteria. Because the criteria is stored and not the users, the actual number of people receiving the notifications is not known until the notifications have been sent. The user information is stored in its separate table. The criteria are stored in different tables and are attached to each notification. Once it is time to send the notifications, the system automatically uses the criteria to find the correct users based on the information they have provided, which is stored on the user table. The user and organization tables may reside in the database 18 or the computing devices 16.

Notifications are sent based on the scheduled date and time. Dates are kept in the computing device 16 using UTC time and converted to the appropriate time zone date and times when shown to the organization 20. The system automatically detects the user's 22 time zone when the account is first created and it is stored on the organization's table. The organization 20 has the ability to change their time zone from an account settings page.

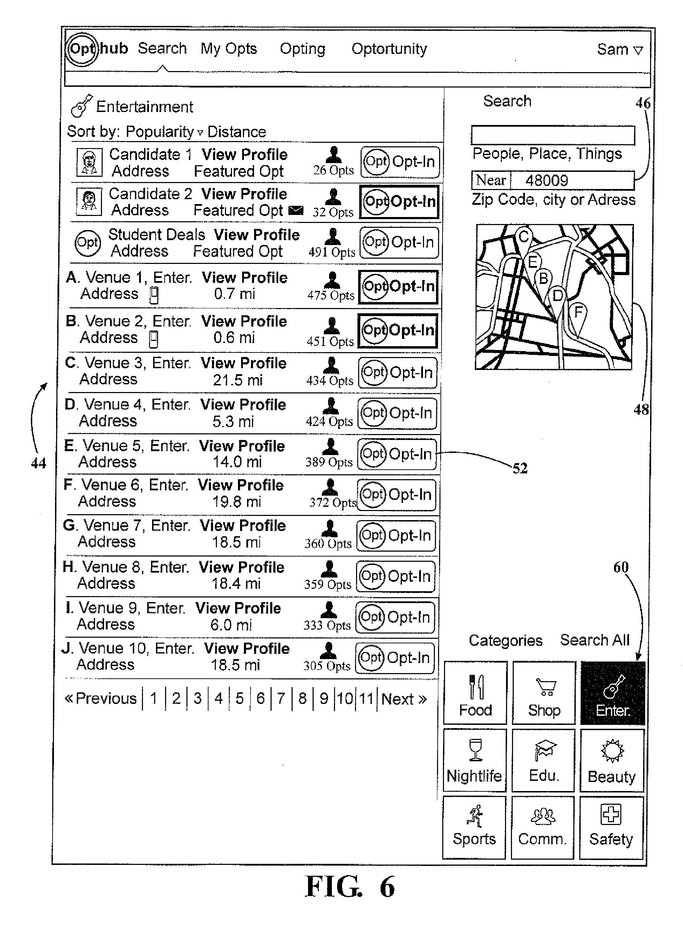

Figure 6 illustrates an exemplary screen shot of the user interface 14 showing the results list 44 for a search relating to the entertainment category. The user 22 selected the entertainment category button 60 to query entertainment venues within a predetermined proximity to the zip code entered in text box 46. The location of the resulting entertainment venues is also shown using the interactive map 48.

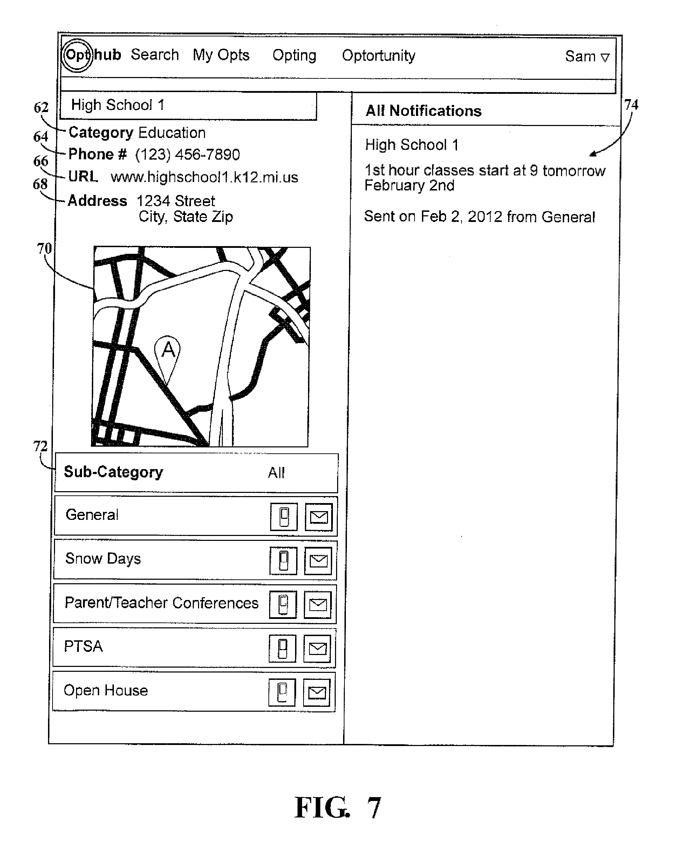

Figure 7 illustrates an exemplary screen shot on the user interface 14 showing a profile page for a fictitious organization 20 named "High School 1." The page shows information about the organization including the category 62, phone number 64, website URL 66, address 68, location on an interactive map 70, sub-categories 72 relating to specific aspects of the organization 20 and a listing of all notifications 74 that have been sent.

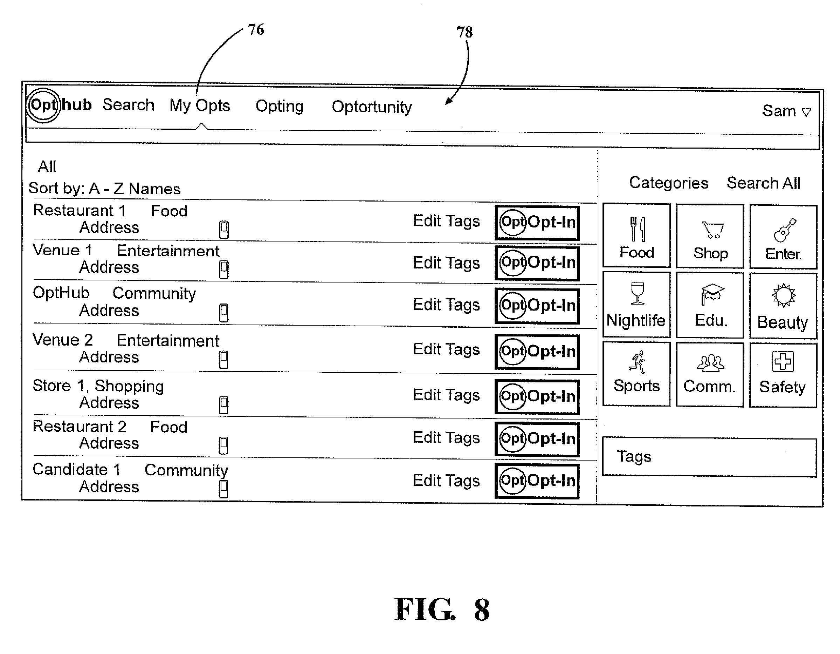

Referring to Figure 8, a registered user 22 can select a tab 76 from the menu bar 78 to see a listing of all organizations 20 that the user 22 has joined. The list can be sorted, for example, alphabetically or by category.

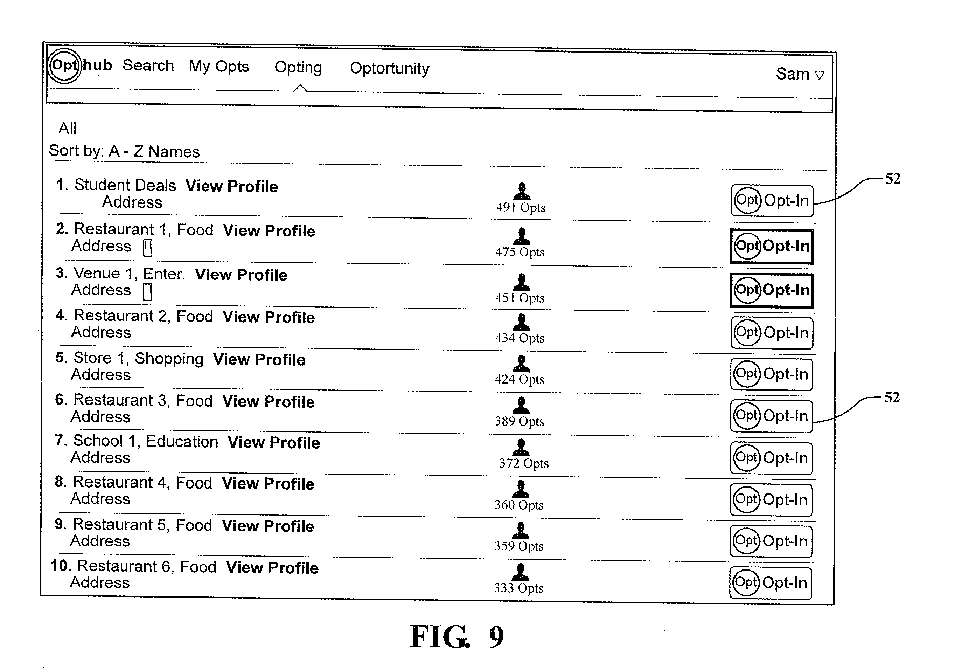

The user interface 14 also has a page as shown in Figure 9 that lists the organizations 20 that are attracting the most users 22. Like the other listings, for each organization 20 identifying information is displayed, such as the name of the organization 20, the address of the organization 20, the assigned category, a link to view a profile of the organization 20, if the user has joined the organization 20 an icon indicating the selected communication method, an indication of the number of users 22 who have joined or opted-in to the organization 20, and a join or opt-in button 52 that indicates whether the user has joined, and if not, allows the user to join that organization 20.

As shown in Figure 12, the user interface 14 also includes a page that allows the user to submit recommendations for organizations to join the system as registered organizations 20. The user 20 provides through the user interface 14 the organization's identifying information including name 80, category 82, phone number 84, website URL 86 and the location information 88.

The invention has been described in an illustrative manner, and it is to be understood that the terminology which has been used is intended to be in the nature of words of description rather than of limitation. As is now apparent to those skilled in the art, many modifications and variations of the present invention are possible in light of the above teachings. It is, therefore, to be understood that within the scope of the appended claims, wherein reference numerals are merely for convenience and are not to be in any way limiting, the invention may be practiced otherwise than as specifically described.

The system disclosed herein may be implemented on one or more suitable computing devices, which generally include applications that may be software applications tangibly embodied as a set of computer-executable instructions on a computer readable medium within the computing device. The computing device may be any one of a number of computing devices, such as a personal computer, processor, handheld computing device, etc.

Computing devices generally each include instructions executable by one or more devices such as those listed above. Computer-executable instructions may be compiled or interpreted from computer programs created using a variety of programming languages and/or technologies, including without limitation, and either alone or in combination, Java ™, C, C++, Visual Basic, Java Script, Perl, etc. In general, a processor (e.g., a microprocessor) receives instructions, e.g., from a memory, a computer-readable medium, etc., and executes these instructions, thereby performing one or more processes, including one or more of the processes described herein. Such instructions and other data may be stored and transmitted using a variety of known computer-readable media.

A computer-readable media includes any medium that participates in providing data (e.g., instructions), which may be read by a computing device such as a computer. Such a medium may take many forms, including, but not limited to, non-volatile media, volatile media, and transmission media. Non-volatile media includes, for example, optical or magnetic disks and other persistent memory. Volatile media include dynamic random access memory (DRAM), which typically constitutes a main memory. Common forms of computer-readable media include any medium from which a computer can read.

It is to be understood that the above description is intended to be illustrative and not restrictive. Many alternative approaches or applications other than the examples provided would be apparent to those of skill in the art upon reading the above description. The scope of the invention should be determined, not with reference to the above description, but should instead be determined with reference to the appended claim, along with the full scope of equivalents to which such claims are entitled. It is anticipated and intended that further developments will occur in the arts discussed herein, and that the disclosed systems and methods will be incorporated into such further examples. In sum, it should be understood that the invention is capable of modification and variation and is limited only by the following claims.

The present embodiments have been particular shown and described, which are merely illustrative of the best modes. It should be understood by those skilled in the art that various alternatives to the embodiments described herein may be employed in practicing the claims without departing from the spirit and scope of the invention and that the method and system within the scope of these claims and their equivalents be covered thereby. This description should be understood to include all novel and non-obvious combinations of elements described herein, and claims may be presented in this or a later application to any novel and non-obvious combination of these elements. Moreover, the foregoing embodiments are illustrative, and no single feature or element is essential to all possible combinations that may be claimed in this or a later application.

All terms used in the claims are intended to be given their broadest reasonable construction and their ordinary meaning as understood by those skilled in the art unless an explicit indication to the contrary is made herein. In particular, use of the singular articles such as "a", "the", "said", etc. should be read to recite one or more of the indicated elements unless a claim recites an explicit limitation to the contrary.

## Claims

1. A method of connecting users and organisations using an internet based communication platform having a database and a user interface, said method comprising the steps of:
storing information regarding a plurality of organisations to define a plurality of registered organisations and corresponding registered information;
inputting demographic information and at least one of a cellular phone number and an e-mail address of a user into the database to define a registered user;
using the interface to conduct a search in the database for registered information that is of interest to the registered user;
identifying particular registered information that is of interest to the registered user to define an interested organization;
using the interface to select the interested organization and automatically connect to a sub-group of users associated with the interested organization;
sending one-way notifications from the interested organization to the sub-group of users through one of a short message service (SMS) and e-mail;
receiving the one-way notification sent to the sub-group at the registered user through one of the cellular phone number and the e-mail address associated with the registered user when the registered user is connected to the sub-group, and
using the interface to de-select the interested organization and automatically disconnect from the sub-group of users associated with the interested organization when the registered user is no longer interested in the interested organization.

2. A method as set forth in claim 1, wherein the step of using the interface to select the interested organization is further defined as activating a selection icon on the interface that is unique to the interested organization.

3. A method as set forth in claim 1 or claim 2 further including the step of prohibiting the registered organizations to have access to the cellular phone number and the e-mail address of the registered user.

4. A method as set forth in any one of claims 1 to 3, further including the step of prohibiting direct communication from the registered user to the registered organization through the interface.

5. A method as claimed in any one of claims 1 to 4, further including the steps of allowing the registered organization access to the demographic information of a registered user if the registered user identified the registered organization as an interested organization, and
prohibiting the registered organization to have access to the cellular phone number and the e-mail address of the registered user.

6. A method as set forth in any one of claims 1 to 5, wherein the step of inputting demographic information is further defined as inputting at least one of a zip code, birth year and gender of the user into the network database.

7. A method as claimed in any one of claims 1 to 6, wherein the step of storing information regarding a plurality of organisations is further defined as storing geographically specific content of a registered organization into the database, and wherein the step of using the interface to conduct a search is further defined as using the interface to conduct a search for the geographically specific content.

8. An internet-based communication platform for connecting users and organisations, said platform comprising
a database having:
information regarding a plurality of organisations to define a plurality of registered organisations and corresponding registered information; and
demographic information and at least one of a cellular phone number and an e-mail address of a user of the network database to define a registered user;
a user interface connected to the database having
a searchable list of at least one of the registered organisations and registered information for the registered user to conduct a search in the database to identify particular registered information that is of interest to the registered user to define an interested organization;
a selection icon associated with each of the registered organisations for the registered user to select the interested organization and automatically connect to a sub-group of users associated with the interested organization and to de-select the interested organization and automatically disconnect from the sub-group of users associated with the interested organization when the interested organization is no longer of interest; and
a notification system connected to the network database for sending one way notifications from the interested organization to the sub-group of users through one of a short message service (SMS) and e-mail such that the registered user receives the one-way notification through one of the cellular phone number and the e-mail address associated with the registered user when the registered user has selected the interested organization.

9. A method of connecting users and organisations using an internet based communication platform having a database and a user interface, said method comprising the steps of
storing information regarding a plurality of organizations into the database; receiving through the user interface information relating to a particular user; receiving through the user interface search criteria from the user; generating and displaying on the user interface a list of search results based on the search criteria from the user and the information relating to the plurality of organizations stored in the database;
receiving a request through the user interface from the user to join a particular organization; and,
sending a one-way notification to a group of users who have joined that particular organization.

10. A method as set forth in claim 9, wherein the number suitable for receiving notifications is a mobile number, and the method further includes
allowing an organization access to the demographic information of users that have joined that particular organization; and,
prohibiting an organization access to the users mobile phone number and e-mail address.

11. A method as set forth in claim 9, wherein the step of sending one-way notifications is further defined as either
(i) sending one way notifications having at least one of promotional information, event notifications, general business information and coupons; or.
(ii) sending one way notifications having at least one link to additional information.

12. A method as set forth in any one of claims 9 to 11, wherein the step of storing information regarding a plurality of organisations is further defined as storing geographically specific content of the organization into the database; and wherein the search criteria from the user includes geographically specific content.

13. A method as claimed in any one of claims 9 to 12, further including the step of ranking and displaying on the interface all of the organisations according to the number of users who have joined each organization.

14. A method as claimed in any one of claims 9 to 13, further including the step of scheduling the delivery of the one-way notification for a particular day and time.

15. A system for implementing an internet based communication platform for connecting users and organisations, said system includes at least one computing device having non-transitory computer readable storage medium with an executable program stored thereon, wherein the program instructs a computing device to:
store information regarding a plurality of organisations into a database;
receive through a user interface information relating to a particular user;
receive through the user interface search criteria from the user;
generate and display on the user interface a list of search results based on the search criteria from the user and the information relating to the plurality of organisations stored in the database;
receive a request through the user interface from the user to join a particular organization; and,
send a one-way notification to a group of users who have joined that particular organization.
